# FASCICULE DE BREVET EUROPEEN

(11) **EP 3 797 875 B1**
(45) Date de publication et mention de la délivrance du brevet: **04.05.2022**
(21) Numéro de dépôt: 20189495.3
(22) Date de dépôt: 05.08.2020
(51) Int. Cl.: B05C 5/02, F16B 33/00, B29C 45/14

(54) **PROCÉDÉ POUR L'APPLICATION AUTOMATIQUE D'UN PRODUIT VISQUEUX SUR UNE TÊTE DE RIVET**
VERFAHREN FÜR DIE AUTOMATISCHE AUFBRINGUNG EINES VISKÖSEN PRODUKTS AUF EINEN NIETENKOPF
METHOD FOR AUTOMATICALLY APPLYING A VISCOUS PRODUCT TO A RIVET HEAD

(30) Priorité: 30.09.2019 FR 1910843
(43) Date de publication de la demande: 31.03.2021
(73) Titulaire: Daher Aerospace, 41400 Saint Julien De Chedon (FR)
(72) Inventeur: DUMAS, Claire, 44230 SAINT SEBASTIEN SUR LOIRE (FR); CAZABAN-LOUSTAUNAU, David, 64800 NAY (FR); TANA, Alain, 65200 TREBONS (FR); LEBEL, Denis, 65600 SEMEAC (FR)
(74) Mandataire: Ipside

(56) Documents cités:
- DE-A1-102009 060 475
- DE-U1- 8 336 955
- US-A1- 2009 217 868
- US-A1- 2019 232 327

## Description

### Domaine technique

L'invention concerne un dispositif et un procédé pour l'application d'un produit visqueux, tel qu'un mastic d'étanchéité, sur une zone précise.

L'invention est plus particulièrement, mais non exclusivement, adaptée au domaine aéronautique et à l'application d'un mastic polymérisable, plus spécifiquement à la réalisation de la couverture d'une tête de rivet émergeant d'une tôle, par une opération manuelle ou automatique.

### Technique antérieure

L'application d'un mastic vise à étanchéifier des assemblages, notamment dans le domaine des aérostructures.

Ainsi, selon un exemple d'opération, le mastic est appliqué sous la forme d'un cordon suivant les bords des assemblages, avec ou sans débordement sur les surfaces des pièces assemblées.

Selon un autre exemple d'opération, le mastic est déposé sur des têtes de rivets déposés selon ligne d'assemblage ou « couture », cette opération d'étanchéification de l'assemble par rivets prenant couramment le nom de « boutonnage ».

La dépose du mastic doit répondre à diverses contraintes, notamment, la quantité déposée doit être juste suffisante pour, à la fois, assurer l'étanchéité et ne pas alourdir inutilement l'assemblage.

Le cordon ou l'enrobage de la tête de rivet, doivent répondre à des contraintes géométriques, notamment en termes de section. Ladite section doit être uniforme sur toute sa longueur du cordon, sans zone de repli et l'enrobage doit couvrir l'intégralité de la tête de rivet avec une épaisseur de mastic sensiblement constante et supérieure à un minimum en tout point de ladite tête de rivet.

A cette fin, la dépose d'un cordon est réalisée manuellement ou à l'aide d'un pistolet, avec un lissage manuel à la spatule pour obtenir la section désirée.

L'enrobage des têtes de rivets, est réalisé avec une buse spéciale et nécessite la dextérité d'un opérateur expérimenté pour être homogène et sans coulure.

Ces opérations sont ainsi longues et coûteuses et rendues encore plus complexes quand elles doivent être réalisées dans le temps ouvert de la polymérisation du mastic.

Lors d'un dépôt au pistolet, le mastic est éjecté du pistolet par une buse qui donne sensiblement la section du mastic déposé, qui correspond à la section du cordon selon un exemple de mise en œuvre.

La dextérité de l'opérateur lui permet d'adapter la vitesse de déplacement de cette buse le long du contour de la pièce, de sorte à obtenir une section de cordon constante. Le pistolet étant équipé d'une gâchette, l'opérateur adapte le débit pour assurer l'uniformité du cordon.

Les zones les plus critiques, lors d'une application au pistolet, sont les débuts et fins de cordon, c'est-à-dire les zones d'accélération et de décélération de la vitesse de dépose, et aussi les zones de raccordement, lorsque la cartouche de mastic doit être changée en cours de réalisation d'un cordon.

Il est d'usage que l'opérateur lisse ces zones de début et fin de cordon au moyen d'une spatule.

Dans le cas de l'enrobage d'une tête de rivet, l'opérateur procède de manière similaire, en déplaçant la buse autour et sur la tête de rivet de sorte à réaliser l'enrobage, avec, le cas échéant, une finition à la spatule.

Ces opérations étant faiblement reproductibles, il est difficile d'automatiser la dépose d'un cordon de mastic ou l'enrobage d'une tête de rivet.

Le document US 5,312,016 décrit un dispositif pour l'application d'un mastic au travers d'une buse.

Ce dispositif comprend une pompe et des moyens d'asservissement complexes permettant d'ajuster la pression et le débit de mastic en fonction des conditions d'application.

Ce dispositif de l'art antérieur est mal adapté au contexte où différents types de mastics sont appliqués, et dans le cas où un même mastic est appliqué mais dans des conditions de température et d'hygrométrie qui peuvent varier.

Outre le manque de flexibilité dans le changement du type de mastic, la polymérisation du mastic dans un tel système de l'art antérieur rend celui-ci inutilisable, à tout le moins durant le temps de son nettoyage qui est lui-même complexe.

Dans le domaine aéronautique les mastics sont généralement des mastics bi-composant livrés en cartouche.

Ladite cartouche comprend soit les deux composants déjà mélangés. La cartouche est alors congelée et réchauffée avant l'application ce qui a pour effet de déclencher la polymérisation.

Ou bien, les deux composants sont déjà pré-dosés dans la cartouche et mis en contact l'un l'autre au moment de l'utilisation de la cartouche.

Ainsi, lors de son application, le mastic est dit « activé ».

Le document DE8336955 décrit un pistolet pour la dépose d'un mastic d'étanchéité contenu dans une cartouche. Ledit pistolet comprend une buse et un dispositif d'ouverture et de fermeture de l'alimentation en mastic de ladite buse par un dispositif mettant en œuvre une vanne à aiguille.

Le document CN208116082 décrit un dispositif pour dispenser de la colle apte à être mis en œuvre par un robot, notamment pour son déplacement et la délivrance de la colle par l'action sur un piston.

Le document US20110300295 décrit un dispositif pour l'application d'un adhésif thermofusible sur une surface, sous la forme de gouttelettes, lesdites gouttelettes étant calibrées lors de leur application par l'intermédiaire d'une buse éloignée de ladite surface d'application et obturable par une aiguille.

Les dispositifs décrits dans ces 3 documents d'art antérieur comportent tous une aiguille permettant d'autoriser ou d'interrompre le flux de matière délivrée.

Ils présentent néanmoins l'inconvénient que tout ou partie de ladite aiguille se trouve dans le flux de matière délivrée, même lorsque ladite aiguille se trouve en position rétractée d'ouverture.

Si cette situation n'est pas très gênante lorsque le produit distribué est fluide, elle est plus problématique lorsque le produit est visqueux tel qu'un mastic d'étanchéité, car d'une part, ladite aiguille perturbe le flux de matière, entraînant des cisaillements dans l'écoulement, pouvant conduire à des manques dans la matière déposée, et dans tous les cas nuisant à la reproductibilité des résultats, d'autre part ladite aiguille doit être dimensionnée pour ne pas fléchir sous l'effet des contraintes qu'elle subit de par cet écoulement, au point de fausser le mécanisme d'ouverture fermeture ou de le rendre peu fiable, ce qui conduit à utiliser des aiguilles plus épaisses et qui, par suite, perturbent encore plus l'écoulement du mastic.

### Exposé de l'invention

L'invention vise à résoudre les inconvénients de l'art antérieur et concerne à cette fin un procédé pour l'application d'un mastic polymérisable et réalisation d'un enrobage d'une tête de rivet émergeant d'une tôle mettant en œuvre un dispositif comprenant :
- une cartouche sensiblement cylindrique contenant un mastic polymérisable activé, ladite cartouche ayant une extrémité de distribution et une extrémité de pression ;
- un réceptacle de ladite cartouche comprenant une interface de connexion avec son extrémité de distribution ;
- des moyens de pression agissant sur l'extrémité de pression de la cartouche pour provoquer l'éjection du mastic activé par l'extrémité de distribution ;
- un ensemble d'application comprenant un conduit d'amenée du mastic dans une buse de boutonnage laquelle comprend une chambre de pré-remplissage, une cavité en forme de cloche apte à coiffer la tête du rivet, un orifice d'application mettant en communication la chambre de pré-remplissage et la cavité en forme de cloche ;
- une aiguille de fermeture, mobile en translation entre une position de fermeture où l'extrémité de l'aiguille obstrue l'orifice d'application de la buse et une position d'ouverture où l'extrémité de l'aiguille est éloignée de l'orifice d'application ;
- des moyens pour manœuvrer l'aiguille en translation entre ces deux positions ;
- des moyens d'automatisme pour séquencer l'action des moyens de pression et le déplacement de l'aiguille (130) entre les positions d'ouverture et de fermeture ;
le procédé comprenant les étapes consistant à :
- a) au cours d'une étape de positionnement, placer la buse de sorte à coiffer la tête de rivet, l'ensemble d'application étant rempli de mastic, l'aiguille étant en position de fermeture, déplacer les moyens de pression de sorte à atteindre une pression prédéterminée dans le conduit d'amenée et la chambre de pré-remplissage de l'ensemble d'application ;
- b) au cours d'une étape de début d'enrobage, déplacer l'aiguille en position d'ouverture de sorte à ouvrir l'orifice d'application et permettre d'écoulement du mastic dans la cavité et sur la tête de rivet ;
- c) au cours d'une étape de fin d'enrobage déplacer l'aiguille en position de fermeture et stopper l'écoulement du mastic ;
- d) au cours d'une étape de d'placement, l'aiguille restant en position de fermeture, dégager la buse de la tête de rivet et déplacer le dispositif jusqu'à la tête de rivet suivante, puis reprendre le cycle à l'étape a) sur ladite tête de rivet suivante ;
dans lequel, au cours de l'étape a) de positionnement la buse est positionnée au-dessus de la tête de rivet, l'extrémité de la buse se trouvant à une distance adaptée de la tôle pour permettre l'échappement de l'air au cours de l'étape b).

Ainsi, la mise en œuvre de ce procédé associé dispositif permet de délivrer une quantité précise et reproductible de mastic pour enrober une tête de rivet. Notamment, la fermeture et l'ouverture de l'orifice liant le canal d'amenée par l'aiguille, permettent d'éviter la création de fils de mastic entre le mastic déposé et la buse et évite ainsi de souiller la pièce en dehors des zones de dépose prévues.

L'invention est avantageusement mise en œuvre selon les modes de réalisation et les variantes exposés ci-après, lesquels sont à considérer de manière individuelle ou selon toute combinaison techniquement opérante.

Selon un mode de réalisation, l'étape c) de fin d'enrobage comprend une temporisation entre la fermeture de l'orifice d'application par l'aiguille et l'étape d) de déplacement. Cette temporisation, fonction de la taille de la tête de rivet et de la viscosité du mastic, assure une couverture uniforme de la tête de rivet.

Avantageusement, l'ensemble d'application comprend en outre une zone de guidage en translation de l'aiguille et constitue un ensemble d'une seule pièce, amovible indépendamment de l'aiguille, la buse étant également amovible, et si la fin de la cartouche est détectée entre les étapes d) et a), le procédé comprend une étape d'initialisation consistant à remplacer la cartouche vide par une nouvelle cartouche de mastic activé, à changer l'ensemble d'application amovible et à remplir le conduit d'amenée et la chambre de pré-remplissage alors que l'aiguille est en position ouverte, puis manœuvrer l'aiguille de sorte à fermer l'orifice d'application avant de passer à l'étape a) de positionnement. Ainsi, il est possible de changer de cartouche au cours d'une opération de boutonnage tout en conservant des résultats reproductibles.

Avantageusement, la zone de guidage débouche dans le conduit d'amenée et l'extrémité de l'aiguille se trouve dans la zone de guidage lorsque l'aiguille est en position rétractée au cours de l'étape b). Aussi, aucun obstacle ne s'oppose à l'écoulement du mastic dans le conduit d'amenée.

Avantageusement, la buse du dispositif pour la mise en œuvre du procédé objet de l'invention comprend des crénelures à son extrémités, lesdites crénelures ménageant des ouvertures sur une hauteur apte à permettre l'échappement de l'air lors de l'enrobage, lorsque l'extrémité de la buse est en contact avec la tôle au cours de l'étape b). Ainsi, le positionnement de la buse par rapport à la tôle est simplifié lors des étapes d'enrobage.

Avantageusement, le dispositif comprend des moyens d'automatisme pour séquencer l'action des moyens de pression et le déplacement de l'aiguille entre les positions d'ouverture et de fermeture, et ledit dispositif est lié à un robot ou un manipulateur comprenant des moyens de commandes programmables, les étapes a) à d) étant réalisées automatiquement selon un programme. Ainsi le procédé objet de l'invention est mis en œuvre de manière automatique

### Description sommaire des dessins

L'invention est décrite ci-après selon ses modes de réalisation préférés, nullement limitatifs et en référence aux figures 1 à 7 dans lesquelles :
[Fig 1] La figure 1 représente selon une vue en perspective un exemple de réalisation du dispositif objet de l'invention ;
[Fig 2] la figure 2 est une vue en coupe d'un exemple de réalisation d'une cartouche de mastic ;
[Fig 3] la figure 3 montre selon une vue partielle en coupe AA définie figure 1, un exemple de réalisation de l'ensemble d'application du dispositif objet de l'invention ;
[Fig 4] la figure 4 représente selon une vue partielle en coupe comme la figure 3, un exemple de réalisation de l'ensemble d'application comprenant une buse de boutonnage ;
[Fig 5] la figure 5 représente selon une vue de face une variante de réalisation de la buse de boutonnage de la figure 4 ;
[Fig 6] la figure 6 est un synopsis du procédé objet de l'invention, appliqué à la réalisation d'une opération de boutonnage.

### Manière(s) de réaliser l'invention

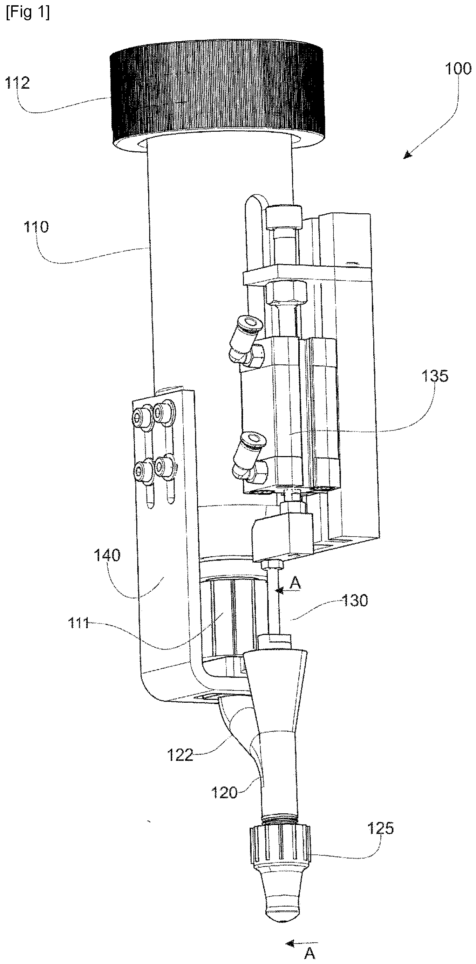

Figure 1, selon un exemple de réalisation, le dispositif objet de l'invention comprend un ensemble (100) pour l'application d'un mastic.

Ledit ensemble comprend un réceptacle (110) apte à accueillir une cartouche (non représentée) comprenant un mastic polymérisable activé, c'est-à-dire que le mastic étant un mastic bi-composant dont la polymérisation est activée par le mélange desdits composants, la cartouche comprenant les deux composants mélangés est congelée, et décongelée avant d'être installée dans le réceptacle.

Selon un autre mode de réalisation, la cartouche comprend les deux composants non mélangés et ceux-ci sont mélangés, provoquant l'activation, par injection ou par rupture d'une barrière interne à la cartouche avant l'application.

Le mastic activé à une viscosité généralement comprise entre 500 et 1500 Pa.s, toutefois le dispositif objet de l'invention est applicable, après essais, à des produits plus visqueux et moins visqueux que cette gamme.

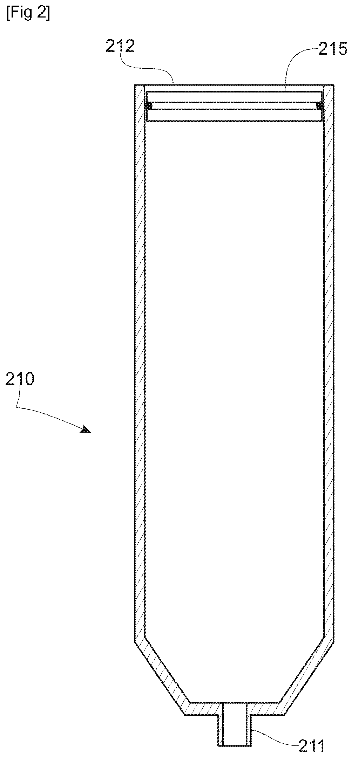

Figure 2, selon un exemple schématique de réalisation, la cartouche (210) comprend deux extrémités, une extrémité de distribution (211) par laquelle le mastic s'écoule, et l'extrémité opposée (212) dite de pression, comprenant un piston (215) apte à coulisser à l'intérieur de la cartouche et dont le déplacement pousse le contenu vers l'extrémité de distribution.

En revenant à la figure 1, la cartouche étant placée dans le réceptacle (110) celui-ci comprend une interface (111) apte à recevoir l'extrémité de distribution de ladite cartouche.

A l'autre extrémité du réceptacle, des moyens d'accouplement (112) permettent de connecter celui-ci à un dispositif de vérin (non représenté) apte à appliquer une pression sur le piston de la cartouche et déplacer celui-ci dans le corps de la cartouche de sorte à provoquer l'écoulement du mastic par l'extrémité de distribution.

Le dispositif comprend un ensemble d'application (120) préférentiellement monobloc et amovible

Cet ensemble d'application (120) comprend une buse (125) amovible.

A cette fin l'ensemble d'application comprend des aménagements à son extrémité, par exemple un filetage, pour y installer la buse (125) amovible.

Ainsi, l'ensemble d'application est apte à recevoir différents types de buses selon le type d'opération à réaliser et la nature du produit déposé.

L'amovibilité de la buse permet également de démonter celle-ci dans le but de son remplacement ou de son nettoyage si celle-ci vient à être bouchée.

Le mastic est amené dans la buse (125) par un conduit d'amenée (122) en connexion hydraulique avec l'extrémité de distribution de la cartouche.

Une aiguille (130), pilotée par un vérin (135) pneumatique, alternativement électrique, permet, par son déplacement axial, d'obstruer ou de libérer la distribution de mastic par la position de de son extrémité (131).

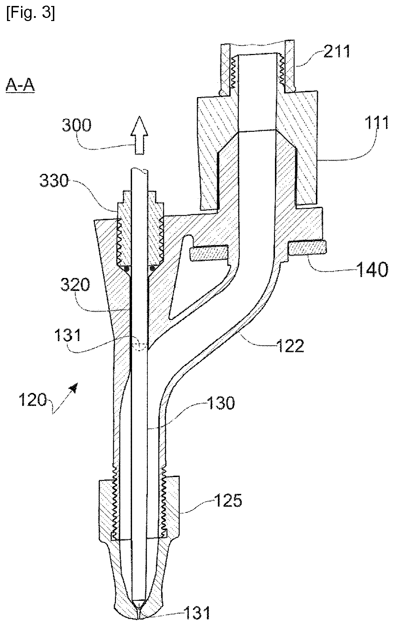

Figure 3, l'ensemble d'application (120) est un ensemble monobloc, constitué avantageusement d'un polymère ayant un faible coefficient d'adhésion avec le mastic.

Selon cet exemple de réalisation cet ensemble est maintenu solidaire du réceptacle par une équerre (140).

L'ensemble d'application comprend une zone (320) de guidage en translation de l'aiguille (130). L'aiguille est représentée sur cette figure en position d'obturation. En déplaçant l'aiguille (130) dans le sens de la flèche (300), l'écoulement du mastic est libéré.

La zone de guidage (320) débouche dans le conduit d'amenée(122).En position rétractée, représentée en pointillés sur la figure 3, l'extrémité (131) de l'aiguille (130) est translatée dans la zone de guidage (320), de sorte que l'aiguille ne perturbe pas l'écoulement du mastic dans le conduit d'amenée (122).

Ainsi, pour remplir l'ensemble d'application, l'aiguille étant en position rétractée, un déplacement du piston (215, figure 2) de la cartouche, éjecte le mastic par l'extrémité de distribution (211) de ladite cartouche et remplit le conduit (122) jusqu'à l'extrémité de la buse (125).

Le conduit (122) étant entièrement rempli, l'aiguille est envoyée en position d'obturation. L'aiguille étant fine, elle traverse aisément le mastic contenu dans le conduit d'amenée (122) jusqu'à l'orifice de la buse qu'elle obstrue par son extrémité (131), stoppant l'écoulement du mastic par cet orifice.

La poursuite de la pression sur le piston de la cartouche, fait monter la pression dans celle-ci et dans le conduit d'amenée (122) jusqu'à une pression dite pression initiale.

Cette pression initiale, fonction du déplacement du piston de la cartouche et de la compressibilité du mastic appliqué, est aisément traduite en une course du vérin agissant sur ledit piston.

Si l'aiguille (130) est alors déplacée dans le sens de la flèche (300), jusqu'à sa position de rétractation où son extrémité se trouve dans la zone de guidage (320), l'écoulement du mastic est libéré et celui-ci s'écoule alors immédiatement par la buse (125).

Le débit d'écoulement instantané à l'ouverture est fonction, notamment, de la viscosité du mastic et de la pression initiale.

Cette pression initiale est déterminée en fonction des conditions de dépose par essais, et traduite en une longueur de course du vérin des moyens de pression, valeur qui est alors donnée dans un abaque ou une base de données pour chaque cas d'application.

A la fin de l'application, la distribution de mastic est instantanément stoppée, sans faire de goutte, en ramenant l'aiguille (130) en position d'obstruction de l'écoulement.

La forme relativement acérée de l'extrémité de l'aiguille a aussi pour effet de couper toute liaison entre le mastic déposé et la buse, évitant la formation de fils.

Suite, à la dépose, l'ensemble d'application (120) est facilement démonté juste après l'emploi, en desserrant l'équerre (140), en le désolidarisant de l'aiguille (130) et en desserrant le presse-étoupe (330).

Une fois démonté, celui-ci est facilement nettoyé, de même que l'aiguille (130) si nécessaire.

Le nettoyage est réalisé au moyen de solvants, il est d'autant plus aisé que ce nettoyage est réalisé avant la polymérisation complète du mastic.

Après polymérisation, une action mécanique associée à des produits décapants commerciaux est nécessaire.

Avantageusement, un nouvel ensemble d'application est installé dès que le premier est démonté, le nettoyage de ce premier ensemble est ainsi réalisé en temps masqué et ne réduit pas la productivité.

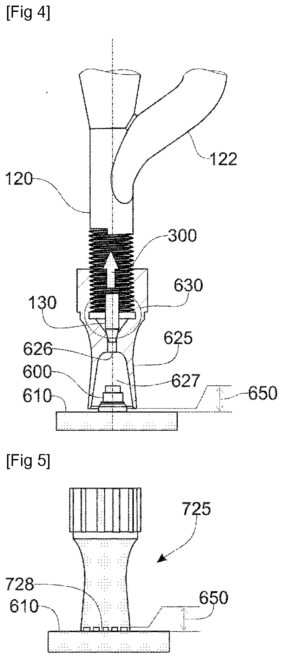

Figure 4, pour réaliser l'enrobage d'une tête (600) de rivet émergeant d'une tôle (610), le dispositif objet de l'invention utilise une buse (625) adaptée à cet effet, dite buse de boutonnage.

Le terme tôle doit être interprété de manière générale et englobe toute surface métallique ou composite d'une pièce faisant l'objet d'un assemblage par rivetage, plus particulièrement dans le domaine des aérostructures. Ainsi, selon les cas d'application, le terme tôle désigne par exemple un panneau de fuselage d'aéronef ou l'aile d'un profilé tel que le talon d'une lisse, d'un cadre ou d'une éclisse, assemblés à un tel panneau de fuselage ou tout autre élément de structure, sans que ces exemples ne soient limitatifs.

De la même manière, les termes rivet et tête de rivet doivent être interprétés dans le contexte des aérostructures comme tout élément d'assemblage ou de fixation comprenant une partie en protrusion par rapport à la tôle, et outre les rivets classiques, comprend les rivets aveugles, les fixations de type LGP^{®}, HILITE^{®}, HI-LOCK^{®} ou tout autre fixation pouvant nécessiter un tel enrobage.

Ladite buse de boutonnage, est installée sur l'extrémité filetée de l'ensemble d'application (120).

Installée sur l'extrémité de l'ensemble d'application, la buse comprend une chambre de pré-remplissage (630) en communication avec une cavité (627) sensiblement en forme de cloche, par l'intermédiaire d'un orifice (626) dit orifice d'application.

Ledit orifice d'application, est obturable par l'aiguille (130). La figure 4 représente le dispositif dans la configuration où ledit orifice (626) est obturé par l'aiguille. En cours d'opération, dans cette configuration, la chambre de pré-remplissage (630) est remplie de mastic, de même que le conduit d'amenée (122).

Le mastic est amené dans la chambre de pré-remplissage (630) depuis la cartouche par le conduit d'amenée (122) sous l'effet des moyens de pression (non représentés).

Lorsque l'aiguille (130) est déplacée depuis cette configuration dans le sens de la flèche (300), l'orifice d'application (626) est ouvert, mettant en communication la chambre de pré-remplissage (630) avec la cavité (627) en forme de cloche vers laquelle le mastic s'écoule.

La forme et la dimension de la cavité (627) sont adaptées à la tête de rivet (600) qui doit être enrobée, une même buse est adaptée à une pluralité de têtes de rivets.

Pour réaliser l'enrobage de la tête de rivet, l'extrémité de la buse doit être située à une distance (650) de la tôle (610) dont émerge la tête de rivet (600), ceci afin de permettre à l'air de s'échapper lors du transfert du mastic de la chambre de pré-remplissage (630) dans la cavité (627). Cette distance est fonction de la dimension de la tête du rivet, elle est nécessairement très inférieure à la hauteur de la tête en protrusion par rapport à la tôle, généralement cette distance (650) est de l'ordre du millimètre, couramment de 2 mm, est, selon des exemples de mise en œuvre, imposée par l'opérateur utilisant le dispositif, ou par la programmation du robot lors d'une opération de boutonnage automatisée.

Ce mode de réalisation permet d'utiliser une même forme de buse pour une variété de tête de rivets.

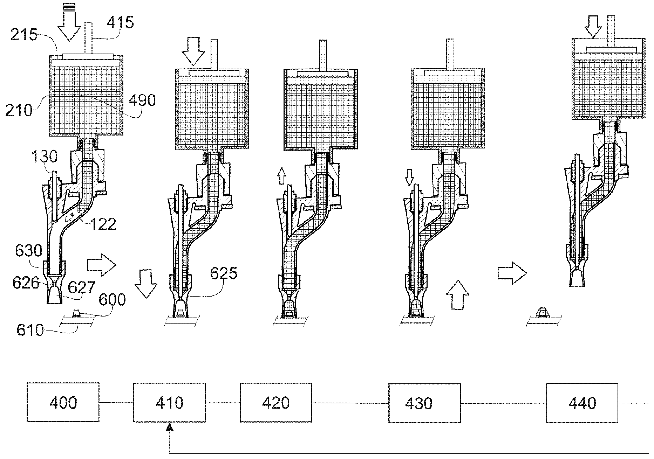

Figure 5, selon un autre mode de réalisation alternatif, la buse (725) comporte des crénelures (728) à son extrémité. La hauteur (650) des crénelures permet de ménager des ouvertures en périphérie de l'extrémité de la buse lorsque celle-ci est en contact avec la tôle (610) d'où émerge la tête de rivet, pour permettre l'échappement de l'air lors de l'enrobage de ladite tête de rivet.

Ce mode de réalisation est plus simple de mise en œuvre car il y a systématiquement contact de l'extrémité de buse avec la tôle et que la hauteur et le nombre de crénelures est optimisé, par exemple par des essais, pour un type de rivet ou une gamme de rivets donnés.

Figure 6, selon un exemple de mise en œuvre, le dispositif est utilisé pour réaliser une opération de boutonnage.

Selon des variantes, les étapes pour la mise en œuvre de cette opération sont réalisées manuellement ou de manière automatique.

Selon cette dernière variante, le dispositif est installé sur un robot ou un manipulateur (non représenté) par l'intermédiaire des moyens d'accouplement (112, 140 figure 1).

Les moyens de pression, agissant sur le piston (215) de la cartouche (210) sont par exemple portés par ledit robot sous la forme d'un vérin (415) agissant sur ledit piston.

Le déplacement de ce vérin est piloté en position et en vitesse par la baie de commande du robot, selon des techniques connues de l'art antérieur, baie de commande qui pilote aussi le vérin de commande du déplacement de l'aiguille (130).

Ainsi, accouplé à un robot, le dispositif permet la dépose de mastic en des emplacements définis selon une trajectoire, par exemple pour une opération de boutonnage, ou également la réalisation de cordons continus selon une trajectoire programmée, le déplacement du dispositif selon ces trajectoires étant réalisé par le robot.

Selon le type d'opération visé, une buse différente est utilisée. Ainsi, pour la réalisation d'un cordon continu de mastic, une buse (125) telle que représentée figures 1 et 3, est préférentiellement utilisée alors que pour une opération de boutonnage, une buse (625, 725) telle que représentée figures 4 et 5 et comprenant une chambre de pré-remplissage et une cavité en forme de cloche, dans laquelle l'aiguille est apte à obturer la communication entre les deux, est préférée.

Le dispositif ainsi décrit est utilisé selon l'invention pour la réalisation de la couverture successive de têtes de rivets émergeants d'une tôle, en déplaçant le dispositif d'une tête de rivet à l'autre, soit manuellement soit selon une séquence programmée et en utilisant des moyens d'automatisme pour séquencer les actions sur les moyens de pression et sur l'aiguille.

Dans tous les cas la mise en œuvre du procédé objet de l'invention permet de délivrer la quantité adéquate de mastic pour chaque tête de rivet, cette quantité étant suffisante pour satisfaire aux conditions d'enrobage tout en évitant les bavures, débordements, et les souillures en dehors des têtes de rivets, assurant en même temps une économie de la quantité de mastic utilisée.

Selon une étape initialisation (400) la cartouche (210) est installée dans le réceptacle, et le vérin de poussée (415) vient au contact du piston de la cartouche. L'aiguille (130) est placée en position d'ouverture de l'orifice (626) entre la chambre de pré-remplissage et la cavité (627). En dehors de la pièce ou de l'ensemble sur lequel le boutonnage est à réaliser, le piston est déplacé de sorte à remplir l'ensemble d'application, c'est-à-dire le conduit d'amenée (122) et la chambre de pré-remplissage (630), jusqu'à ce que du mastic s'échappe par la buse (626).

Ledit mastic qui s'échappe est perdu mais représente une très petite quantité et cette étape initiale n'est réalisée que lors de chaque changement de cartouche.

L'aiguille (130) étant en position d'ouverture, l'air peut s'échapper par la buse lors du remplissage du conduit d'amenée (122) et de la chambre de pré-remplissage (630).

Dès que l'ensemble d'application est rempli, l'aiguille est déplacée en position de fermeture et l'opération de boutonnage proprement dite peut commencer.

Selon une étape de positionnement (410), le dispositif est déplacé au-dessus de la tête de rivet à enrober, puis de sorte à ce que la buse (625) vienne coiffer ladite tête de rivet (600), tout en laissant un espace suffisant entre l'extrémité de la buse et la tôle (610) de sorte à permettre à l'air de s'échapper lors de l'enrobage.

Simultanément à ce déplacement, ou, selon des variantes de réalisation, préalablement ou suite à celui-ci, le vérin de poussée (415) est déplacé d'une distance prédéterminée, poussant sur le piston (215) de la cartouche.

Sous l'effet de ce initial, l'aiguille obturant toujours l'orifice (626) de la buse, le mastic est éjecté hors de la cartouche et remplit le conduit (122) de l'ensemble d'application et la chambre de pré-remplissage (630) avant d'atteindre une pression initiale prédéterminée.

La section de la cartouche étant comparativement importante par rapport à la section du conduit d'amenée, cette pression initiale est fonction du déplacement du piston (215) et un même déplacement relatif du piston provoque une montée en pression sensiblement constante, quasiment jusqu'au vidage de la cartouche et tant que le processus a lieu dans le temps ouvert du mastic en termes de polymérisation.

Selon une étape (420) de début d'enrobage, l'aiguille (130) est déplacée de sorte à ouvrir l'orifice qui met en communication la cavité (627) en forme de cloche de la buse avec la chambre de pré-remplissage (630), ce qui a pour effet de remplir la cavité (627) autour de la tête de rivet.

Selon une étape de fin d'enrobage (430), l'aiguille (130) est manœuvrée en sens inverse de sorte à obturer l'orifice d'application (626).

Le temps séparant les deux manœuvres de l'aiguille correspondant au début et à la fin de l'enrobage, est déterminé en fonction de la viscosité du mastic, du volume de la cavité (627) et de celui de la tête de rivet.

Ces valeurs sont déterminées par des essais préalables et transcrites dans des tables, abaques ou bases de données.

L'obturation de l'orifice d'application (626) par l'aiguille lors de l'étape (430) de fin d'enrobage, stoppe instantanément l'écoulement du mastic dans la cavité (627), et permet de délivrer la quantité de mastic nécessaire et suffisante pour réaliser l'enrobage.

Le temps séparant l'ouverture et la fermeture de l'orifice étant reproductible, la pression appliquée au mastic préalablement à l'ouverture l'étant également, la quantité de mastic déposée sur chaque tête de rivet de l'opération de boutonnage l'est également.

Selon une étape de déplacement (440), un premier déplacement permet d'écarter la buse de la tête de rivet, puis de déplacer le dispositif au-dessus de la tête de rivet à enrober suivante.

Selon une variante de réalisation, une temporisation est observée entre l'étape de fin d'enrobage (430) et l'étape de déplacement (440). Cette temporisation est fonction de la dimension de la tête de rivet à enrober et de la quantité de mastic déposée. Elle est généralement inférieure à 5 secondes, préférentiellement inférieure à 2 secondes et encore préférentiellement inférieure à 1 seconde, et est fixée juste nécessaire pour assurer la qualité de l'enrobage tout en préservant la productivité de l'opération de boutonnage.

La buse étant positionnée au-dessus de la tête rivet suivante, si le contenu de mastic restant dans la cartouche est suffisant, le cycle décrit ci-dessus reprend à l'étape (410) de mise en pression initiale.

La fin de la cartouche est aisément détectée par la position du vérin de poussée.

En cas de remplacement de la cartouche, l'ensemble d'application est préférentiellement remplacé en même temps, de sorte à éviter le mélange de mastics ayant des temps ouverts différents.

Ainsi, en cas de remplacement de la cartouche au cours d'une opération de boutonnage, la reprise de l'opération comporte la réalisation d'une étape initiale (400) visant à atteindre la pression initiale dans l'ensemble d'application.

La description ci-avant et les exemples de réalisation montrent que l'invention atteint le but visé. Le dispositif de dépose de mastic est automatisable facilement grâce au contrôle de l'aguille de fermeture/ouverture de la buse, qui permet l'enrobage des têtes de rivet de manière reproductible mais aussi des départs et des fins de cordon sans défaut, selon l'application visée.

Ainsi la quantité de mastic déposée est contrôlée et reproductible, ce qui permet notamment d'automatiser les opérations de boutonnage.

Ce dispositif utilise des cartouches de mastic standard.

L'ensemble d'application est interchangeable rapidement et facile à nettoyer.

Ainsi, la cartouche peut être changée en même temps que l'ensemble d'application au cours d'une opération de boutonnage, sans compromettre la reproductibilité des résultats.

## Revendications

1. Procédé pour l'application d'un mastic polymérisable et réalisation d'un enrobage d'une tête de rivet (600) émergeant d'une tôle (610) mettant en œuvre un dispositif comprenant :
- une cartouche (210) sensiblement cylindrique contenant un mastic polymérisable activé, ladite cartouche ayant une extrémité de distribution (211) et une extrémité de pression (212) ;
- un réceptacle (110) de ladite cartouche comprenant une interface de connexion (111) avec son extrémité de distribution ;
- des moyens de pression (215) agissant sur l'extrémité de pression (212) de la cartouche pour provoquer l'éjection du mastic activé par l'extrémité de distribution (211) ;
- un ensemble d'application (120) amovible comprenant un conduit d'amenée (122) du mastic dans une buse de boutonnage (625, 725) laquelle comprend une chambre de pré-remplissage (630), une cavité (627) en forme de cloche apte à coiffer la tête du rivet (600), un orifice d'application (626) mettant en communication la chambre de pré-remplissage (630) et la cavité (627) en forme de cloche ;
- une aiguille (130) de fermeture, mobile en translation entre une position de fermeture où une extrémité (131) de l'aiguille obstrue l'orifice (626) d'application de la buse (625, 725) et une position d'ouverture où l'extrémité (131) de l'aiguille est éloignée de l'orifice d'application,
- des moyens (135) pour manœuvrer l'aiguille en translation entre ces deux positions ;
- des moyens d'automatisme pour séquencer l'action des moyens de pression et le déplacement de l'aiguille (130) entre les positions d'ouverture et de fermeture ;
le procédé comprenant les étapes consistant à :
- a) au cours d'une étape de positionnement (410) placer la buse (625, 725) de sorte à coiffer la tête de rivet (600), l'ensemble d'application étant rempli de mastic, l'aiguille (130) étant en position de fermeture, déplacer les moyens de pression (215, 415) de sorte à atteindre une pression prédéterminée dans le conduit d'amenée (122) et la chambre de pré-remplissage (630) de l'ensemble d'application ;
- b) au cours d'une étape de début d'enrobage (420), déplacer l'aiguille en position d'ouverture de sorte à ouvrir l'orifice d'application (626) et permettre d'écoulement du mastic dans la cavité (627) et sur la tête de rivet( 600) ;
- c) au cours d'une étape de fin d'enrobage (430) déplacer l'aiguille (130) en position de fermeture et stopper l'écoulement du mastic ;
- d) au cours d'une étape de d'placement (440), l'aiguille (130) restant en position de fermeture dégager la buse (625,725) de la tête de rivet et déplacer le dispositif jusqu'à la tête de rivet suivante, puis reprendre le cycle à l'étape a) sur ladite tête de rivet suivante ;
**caractérisé en ce qu'**au cours de l'étape a) de positionnement (410) la buse (625, 725) est positionnée au-dessus de la tête de rivet, l'extrémité de la buse (625, 725) se trouvant à une distance (650) adaptée de la tôle (610) pour permettre l'échappement de l'air au cours de l'étape b).

2. Procédé selon la revendication 1, dans lequel l'étape c) de fin d'enrobage (430) comprend une temporisation entre la fermeture de l'orifice d'application (626) par l'aiguille (130) et l'étape d) de déplacement (440).

3. Procédé selon la revendication 1, dans lequel l'ensemble d'application (120) comprend en outre une zone de guidage (320) en translation de l'aiguille (130) et constitue un ensemble d'une seule pièce, amovible indépendamment de l'aiguille, la buse (625, 725) étant également amovible, et dans lequel si la fin de la cartouche est détectée entre les étapes d) et a), comprend une étape d'initialisation (400) consistant à remplacer la cartouche vide par une nouvelle cartouche de mastic activé, à changer l'ensemble d'application amovible (120) et 'remplir le conduit d'amenée (122) et la chambre de pré-remplissage (630) alors que l'aiguille (130) est en position ouverte, puis manœuvrer l'aiguille (130) avant de passer à l'étape a) de positionnement (410).

4. Procédé selon la revendication 3, dans lequel la zone de guidage (320) débouche dans le conduit d'amenée (122) et dans lequel l'extrémité (131) de l'aiguille se trouve dans la zone de guidage (320) lorsque l'aiguille (130) est en position rétractée au cours de l'étape b).

5. Procédé selon la revendication 1, dans lequel la buse (725) comprend des crénelures (728) à son extrémités, lesdites crénelures ménageant des ouvertures sur une hauteur (650) apte à permettre l'échappement de l'air au cours de l'étape b), lorsque l'extrémité de la buse (725) est en contact avec la tôle (610).

6. Procédé selon la revendication 1, dans lequel le dispositif de mise en œuvre comprend des moyens d'automatisme pour séquencer l'action des moyens de pression (415) et le déplacement de l'aiguille (130) entre les positions d'ouverture et de fermeture, ledit dispositif étant lié à un robot ou un manipulateur comprenant des moyens de commandes programmables, les étapes a) à d) étant réalisées automatiquement selon un programme.

## Patentansprüche

1. Verfahren zum Aufbringen einer polymerisierbaren Dichtungsmasse und Herstellen einer Beschichtung eines Nietenkopfes (600), der von einem Blech (610) hervorsteht, das eine Vorrichtung implementiert, umfassend:
- eine im Wesentlichen zylindrische Kartusche (210), die eine aktivierte polymerisierbare Dichtungsmasse enthält, wobei die Kartusche ein Ausgabeende (211) und ein Druckende (212) aufweist;
- einen Behälter (110) der Kartusche, der eine Verbindungsfläche (111) mit ihrem Ausgabeende umfasst;
- ein Druckmittel (215), das auf das Druckende (212) der Kartusche einwirkt, um das Ausstoßen der aktivierten Dichtungsmasse über das Ausgabeende (211) auszulösen;
- eine entfernbare Aufbringeinheit (120), die eine Zuführleitung (122) für die Dichtungsmasse zu einer Knopfdüse (625, 725) umfasst, die eine Vorfüllkammer (630), einen glockenförmigen Hohlraum (627), der zum Abdecken des Nietenkopfes (600) ausgebildet ist, eine Aufbringöffnung (626), die die Vorfüllkammer (630) und den glockenförmigen Hohlraum (627) in Verbindung bringt, umfasst;
- eine Schließnadel (130), die zwischen einer Schließposition, in der ein Ende (131) der Nadel die Aufbringöffnung (626) der Düse (625, 725) blockiert, und einer Öffnungsposition, in der das Ende (131) der Nadel von der Aufbringöffnung entfernt gelegen ist, translatorisch bewegbar ist,
- Mittel (135) zum translatorischen Betätigen der Nadel zwischen den zwei Positionen;
- Automatisierungsmittel zum Sequenzieren der Aktion des Druckmittels und der Verschiebung der Nadel (130) zwischen den Öffnungs- und der Schließpositionen;
wobei das Verfahren die Schritte umfasst, bestehend aus:
- a) Positionieren der Düse (625, 725) während eines Positionierungsschritts (410), so dass sie den Nietenkopf (600) abdeckt, wobei die Aufbringeinheit mit Dichtungsmasse gefüllt wird, wobei die Nadel (130) in Schließposition ist, Verschieben der Druckmittel (215, 415), so dass es einen vorgegebenen Druck in der Zuführleitung (122) und der Vorfüllkammer (630) der Aufbringeinheit erreicht;
- b) Verschieben der Nadel während eines Anfangsschritts der Beschichtung (420) in Öffnungsposition, so dass sie die Aufbringöffnung (626) öffnet und das Fließen der Dichtungsmasse in den Hohlraum (627) und auf den Nietenkopf (600) gestattet;
- c) Verschieben der Nadel (130) während eines Endschritts der Beschichtung (430) in Schließposition und Anhalten des Fließens der Dichtungsmasse;
- d) während eines Verschiebungsschritts (440), wobei die Nadel (130) in Schließposition ruht, Befreien der Düse (625, 725) aus dem Nietenkopf und Verschieben der Vorrichtung bis zum nächsten Nietenkopf, danach Fortsetzen des Zyklus mit Schritt a) auf dem nächsten Nietenkopf; **dadurch gekennzeichnet, dass** die Düse (625, 725) während des Schritts a) der Positionierung (410) über dem Nietenkopf positioniert ist, wobei das Ende der Düse (625, 725) sich von dem Blech (610) in einem geeigneten Abstand (650) befindet, um während des Schritts b) das Entweichen von Luft zu gestatten.

2. Verfahren nach Anspruch 1, wobei der Endschritt c) der Beschichtung (430) eine Zeitverzögerung zwischen der Schließung der Aufbringöffnung (626) durch die Nadel (130) und dem Schritt d) der Verschiebung (440) umfasst.

3. Verfahren nach Anspruch 1, wobei die Aufbringeinheit (120) ferner einen Führungsbereich (320) in Translation der Nadel (130) umfasst und eine einstückige Einheit bildet, die unabhängig von der Nadel entfernt werden kann, wobei die Düse (625, 725) ebenfalls entfernt werden kann, und wobei, wenn das Ende der Kartusche zwischen den Schritten d) und a) detektiert wird, ein Initialisierungsschritt (400) umfasst ist, der aus dem Ersetzen der leeren Kartusche durch eine neue Kartusche mit aktivierter Dichtungsmasse, dem Wechseln der entfernbaren Aufbringeinheit (120) und dem Befüllen der Zuführleitung (122) und der Vorfüllkammer (630), wenn die Nadel (130) in offener Position ist, dann dem Betätigen der Nadel (130) vor dem Übergehen zu Schritt a) der Positionierung (410) besteht.

4. Verfahren nach Anspruch 3, wobei der Führungsbereich (320) in die Zuführleitung (122) mündet und wobei das Ende (131) der Nadel sich in dem Führungsbereich (320) befindet, wenn die Nadel (130) während des Schritts b) in zurückgezogener Position ist.

5. Verfahren nach Anspruch 1, wobei die Düse (725) Rändelungen (728) an ihrem Ende umfasst, wobei die Rändelungen die Öffnungen auf einer Höhe (650) bereitstellen, die ausgebildet ist, um während des Schritts b) das Entweichen von Luft zu gestatten, wenn das Ende der Düse (725) in Kontakt mit dem Blech (610) ist.

6. Verfahren nach Anspruch 1, wobei die Durchführungsvorrichtung ein Automatisierungsmittel umfasst, um die Aktion des Druckmittels (415) und die Verschiebung der Nadel (130) zwischen der Öffnungs- und Schließposition zu sequenzieren, wobei die Vorrichtung mit einem Roboter oder einer Betätigungsvorrichtung verbunden ist, der bzw. die ein programmierbares Befehlsmittel umfasst, wobei die Schritte a) bis d) gemäß einem Programm automatisch ausgeführt werden.

## Claims

1. Method for applying a polymerizable mastic and carrying out a coating of a rivet head (600) emerging from a sheet (610) using a device comprising:
- a substantially cylindrical cartridge (210) containing an activated polymerizable mastic, said cartridge having a distribution end (211) and a pressure end (212);
- a receptacle (110) for said cartridge comprising a connection interface (111) with the distribution end thereof;
- pressure means (215) acting on the pressure end (212) of the cartridge to cause the ejection of the activated mastic through the distribution end (211);
- a removable application assembly (120) comprising a mastic-feed pipe (122) in a buttoning nozzle (625, 725) which comprises a pre-filling chamber (630), a bell-shaped cavity (627) able to fit on top of the rivet head (600), an application orifice (626) putting the pre-filling chamber (630) and the bell-shaped cavity (627) in communication;
- a closure needle (130), able to move in translation between a closed position where an end (131) of the needle obstructs the application orifice (626) of the nozzle (625, 725) and an open position where the end (131) of the needle is distant from the application orifice;
- means (135) for maneuvering the needle in translation between these two positions;
- automation means for sequencing the action of the pressure means and the movement of the needle (130) between the open and closed positions;
the method comprising the steps of:
- a) during a positioning step (410), placing the nozzle (625, 725) so as to fit on top of the rivet head (600), the application assembly being filled with mastic, the needle (130) being in the closed position, moving the pressure means (215, 415) so as to achieve a predetermined pressure in the feed pipe (122) and the pre-filling chamber (630) of the application assembly;
- b) during a coating-beginning step (420), moving the needle into the open position so as to open the application orifice (626) and to allow flow of the mastic in the cavity (627) and onto the rivet head (600);
- c) during a coating-ending step (430) moving the needle (130) into the closed position and stopping the flow of the mastic;
- d) during a movement step (440), the needle (130) remaining in the closed position, releasing the nozzle (625, 725) from the rivet head and moving the device to the following rivet head, and then resuming the cycle at step a) on said following rivet head;
**characterized in that**, during the positioning step a) (410), the nozzle (625, 725) is positioned above the rivet head, the end of the nozzle (625, 725) being located at a suitable distance (650) from the sheet (610) to enable air to escape during step b).

2. Method according to claim 1, wherein the end-of-coating step c) (430) comprises a time delay between the closure of the application orifice (626) by the needle (130) and the movement step d) (440).

3. Method according to claim 1, wherein the application assembly (120) further comprises a zone (320) for guiding the needle (130) in translation and constitutes an assembly in a single piece, removable independently of the needle, the nozzle (625, 725) also being removable, and wherein, if the end of the cartridge is detected between steps d) and a), comprises an initialization step (400) consisting in replacing the empty cartridge with a new activated-mastic cartridge, changing the removable application assembly (120) and filling the feed pipe (122) and the pre-filling chamber (630) while the needle (130) is in the open position, and then maneuvering the needle (130) before passing to the position step a) (410).

4. Method according to claim 3, wherein the guidance zone (320) emerges in the feed pipe (122) and wherein the end (131) of the needle is located in the guidance zone (320) when the needle (130) is in the retracted position during step b).

5. Method according to claim 1, wherein the nozzle (725) comprises crenellations (728) at the ends thereof, said crenellations forming openings over a height (650) able to allow the escape of air during step b), when the end of the nozzle (725) is in contact with the sheet (610).

6. Method according to claim 1, wherein the use device comprises automation means for sequencing the action of the pressure means (415) and the movement of the needle (130) between the open and closed positions, said device being connected to a robot or a manipulator comprising programmable control means, steps a) to d) being performed automatically according to a program.
